(19)

Europäisches
Patentamt
European
Patent Office
Office européen
des brevets

(11) **EP 2 031 746 A1**

(12) **EUROPEAN PATENT APPLICATION**
published in accordance with Art. 153(4) EPC

(43) Date of publication:
**04.03.2009 Bulletin 2009/10**

(51) Int Cl.:
***H02M 5/293*** *(2006.01)*

(21) Application number: **07743124.5**

(22) Date of filing: **10.05.2007**

(86) International application number:
**PCT/JP2007/059689**

(87) International publication number:
**WO 2007/129756 (15.11.2007 Gazette 2007/46)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **10.05.2006 JP 2006131038**

(71) Applicant: **Meidensha Corporation Tokyo 141-0032 (JP)**

(72) Inventor: **TADANO, Yugo**

   **(JP)**

(74) Representative: **Manitz, Finsterwald & Partner GbR**
**Martin-Greif-Strasse 1**
**80336 München (DE)**

(54) **INPUT/OUTPUT DUTY CONTROL METHOD FOR AC-AC DIRECT CONVERSION DEVICE**

(57)    **[Problem]**
   An output voltage error and a fluctuation drop of a pulse voltage are reduced to reduce higher harmonics and a common voltage and to improve a minimum on-pulse width in a low voltage region.
   **[Means For Solving Problem]**
   The phase and magnitude of an input current command vector of a virtual input converter are controlled to control the magnitude of a virtual DC voltage. An intermediate voltage between input lines and a zero voltage vector are used in the region where the input current command vector is at a low output voltage, and the maximum voltage between the input lines and the intermediate voltage between the input lines are used in the high output voltage region. A PWM control is performed in a virtual output inverter to reduce a number of divisions in one operation period of duty pulses. The output voltage is controlled in the low output voltage region by using an intermediate voltage between the input lines. In the high output voltage region, the virtual direct current voltage is at an ideally maximum constant, and the PWM control is made in the virtual output inverter. The switching pattern is determined by using the zero-voltage vector mode connected to the input intermediate phase.

## FIG.1

**Description**

**TECHNICAL FIELD**

The present invention relates to an AC-AC direct conversion device (a matrix converter) which converts a voltage or a frequency inputted from a single-phase or a multiple-phase alternating current power source into an arbitrary voltage or frequency and outputs it and, particularly, relates to an input/output duty control method for the AC-AC direct conversion device in which, in a virtual input converter, a switching pattern is created by a 2n number of base vectors via which mutually different arbitrary phases are connected to a P side of a virtual direct current link and an N side thereof and an n number of zero voltage vectors via which the same phases are connected to the P side of the virtual direct current link and the N side thereof, in a virtual output inverter, a switching pattern is creased by 2 + 2n kinds of base vectors including two zero voltage vectors, and a switching pattern is created which is a synthesis of these switching patterns, and respective bi-directional switches are controlled with a switching pattern which is a synthesis of these switching patterns.

**BACKGROUND ART**

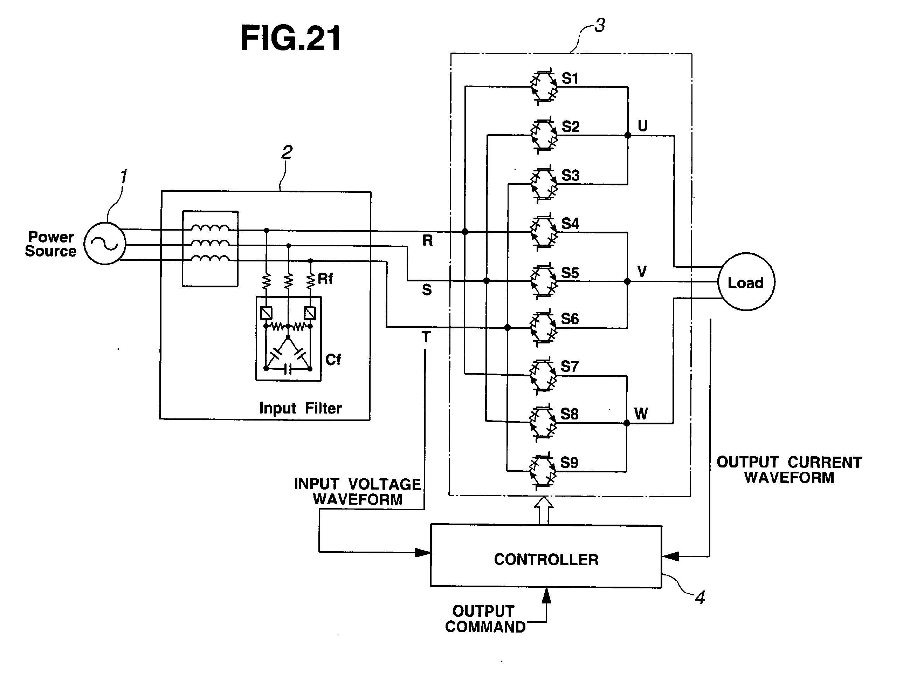

This kind of previously proposed AC-AC direct current conversion device is a conversion apparatus which performs switching of bi-directional switches using self-commutating type semiconductor elements at a high speed to convert the single-phase or multiple-phase alternating current input to a power of an arbitrary voltage or a frequency. Fig. 21 shows a basic configuration of the AC-AC direct conversion device. An input filter 2 and an AC-AC direct conversion circuit 3 of a configuration of bi-directional switches S1 ~S9 are connected to respective phases of R, S, and T of a three-phase alternating current power source 1. A control unit (controller) 4 performs a PWM control for the respective bi-directional switches at a frequency sufficiently higher than a power supply frequency to obtain alternating outputs of U, V, and W controlled to the arbitrary voltage or frequency while the input voltage thereof is directly being applied to a load such as a motor.

A switching pattern of the bi-directional switches in the AC-AC direct conversion device is determined by an AND condition of a PWM converter pattern which provides a signal synchronized with an input voltage and a PWM inverter pattern that is created in accordance with an output frequency and voltage, in a case of, for example, a carrier amplitude modulation. Thus, an input current of the AC-AC direct conversion device is controlled by the PWM converter pattern and the output voltage and frequency are controlled by the PWM inverter pattern. While an input power factor is being maintained at " 1 ", a sinusoidal wave of the input current, the sinusoidal wave of an output waveform, and a frequency conversion operation can simultaneously be achieved. It should, herein, be noted that there is often a case where each of the bi-directional switches is constituted using a plurality of unidirectional switches as shown in the drawing.

A controlling method of the AC-AC direct conversion device is broadly classified into two methods of a virtual DC link type (an indirect conversion method) and an AC- AC direct type. In the virtual DC link type method, the virtual direct current link is considered and the virtual input converter and the virtual output inverter are devised to be enabled to be controlled independently of each other. In addition, this is similar to a configuration of a conventional current source PWM converter + a conventional voltage source PWM inverter and an idea of control becomes easy. Meanwhile, there is a constraint that six switching patterns such that each phase of the input side of the AC-AC conversion device and each phase of the output side thereof is connected to all different phases at 1 : 1 are not created. Although the AC-AC direct type method has no constraint in the above-described switching patterns, in general, it tends to be complicated in algorithm.

The methods of creating the PWM pattern are mainly divided into a carrier comparison approach and a space vector modulation approach. In the carrier comparison approach, a magnitude comparison between a triangular wave carrier and the sinusoidal wave creates the PWM pattern. As the carrier comparison approach applied to the virtual DC link type method, a method in which the carrier of the virtual output inverter is created from the carrier of the virtual input converter and a virtual PWM pulse has been proposed. Thus, a switching loss and noises are reduced, with the same number of times of switching of switch carried out in the PWM control reduced and a control accuracy of the output voltage can be improved (for example, refer to a patent document 1).

In addition, in the AC-AC direct conversion device in which the virtual DC link method and the carrier comparison method have been adopted, a virtual PAM control method in which the magnitude of the output voltage is controlled by adjusting the virtual direct current voltage through a PAM (Pulse Amplitude Modulation) method and, in the virtual inverter, only the output frequency is controlled has been proposed (refer to, for example, a non-patent document 2).

The space vector modulation approach is an approach in which an instantaneous space current vector is selected in accordance with a switching state of each switch of the matrix converter. This selection determines the switching pattern. A method in which this space vector modulation approach has been adopted has been proposed (for example, refer to non-patent document 1). In this space vector modulation approach, an appropriate switching pattern is selected so that the number of times of the switching of switch can be reduced, the switching loss can be reduced, a load current variation can be reduced, and a distortion of the output voltage can be reduced.

In addition, a methodology in which the space vector modulation approach has been adopted in the virtual DC link method has been published (for example, refer to a non-patent document 3).

Patent document 1: a Japanese Patent Application Publication (tokkai) No. 2005-168198.
Non-Patent document 1: a paper published in Japan titled " An Analysis Method of AC-AC direct converters" Paper collections of Electrical Engineering Society In Japan , SPC97-53;
Non-patent document 2: a literature published in Japan titled " A PAM control method for Matrix Converter based on virtual AC/DC/AC " proceedings of the 2005 Japan Industry Applications Society Conference 1-43, 1-203 ~ 1 -206;
Non-patent document 3: " Space Vector Modulated Three-phase to Three-phase Matrix Converter with Input Power Factor Correction" L. Huever, etc. IEEE trans. On Industry Applications, vol. 31, No. 6, 1995.

## DISCLOSURE OF THE INVENTION

### Problem to be Solved:

In a case where, in the AC-AC direct conversion device, a switching control of the bi-directional switches using the virtual DC link method is carried out, a control of the output voltage is, ordinarily, performed through the PWM control of the virtual output inverter, as described above.

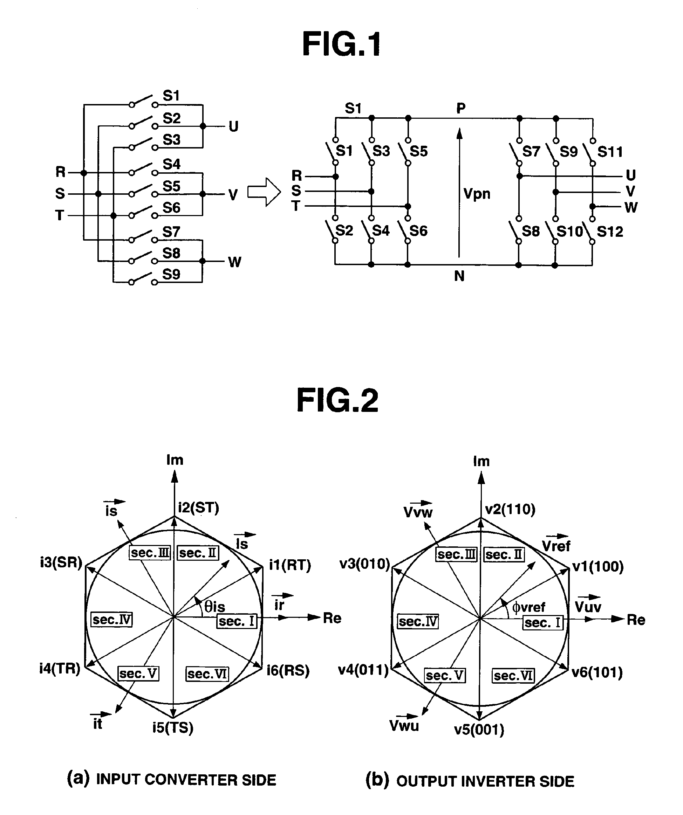

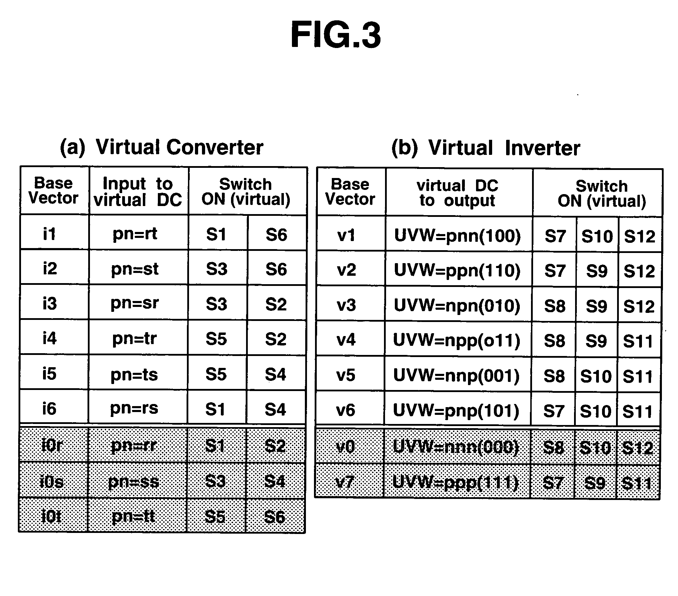

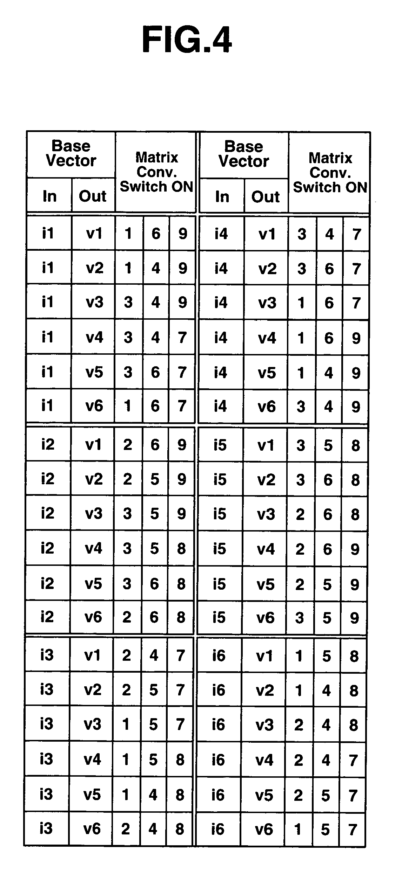

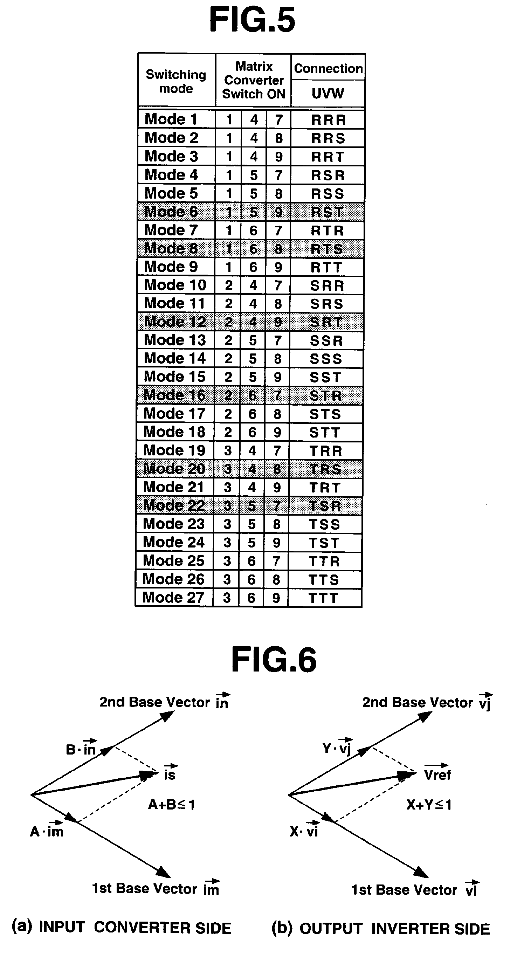

Non-patent document 3 described hereinbefore teaches a methodology such that the AC-AC direct conversion device is separated into a virtual current source converter and a virtual voltage source inverter, as shown in Fig. 1, and both of an input current control and an output voltage control can be thought to mutually be independent of each other. Now, sectors and base vectors of space vectors of input and output sides in a virtual converter (virtual input converter + virtual output inverter) shown in Fig. 1 are defined as shown in Fig. 2. The input is an R-phase voltage basis (≒ an R-phase current under the power factor 1 control), the output is an U-V line voltage basis, and these sector and vectors are represented in a mutually three-phase-to-two-phase converted stationary $\alpha$-$\beta$ coordinates system. Table of Fig. 3 represents sectors in which space vector commands are present and virtual switching patterns at that time. The input of the virtual converter and output thereof are linked via the virtual DC link. Hence, if table of Fig. 3 is replaced with switch numbers of 1 ~ 9 (S1 ~S9 in Fig.1) of the actual AC-AC direct conversion device and a combination of on-states of the switches is considered, table of Fig. 3 can be expanded to a table of Fig. 4. In addition, as appreciated from the configuration of the AC-AC direct conversion device in Fig. 21, as the constraint of switching of the switches, a prevention of an input power supply short-circuiting and a continuation of an output load current flow need to be maintained. Hence, from among three groups of switches " 1, 2, 3 ", " 4, 5, 6 ", and " 7, 8, 9 " connected to output U-phase, output V-phase, and output W-phase, only one switch of each of the three switch groups is needed to be in the on state. Therefore, a combination of on-states of nine bi-directional switches S1 ~ S9 is limited to 27 patterns as shown in the table of Fig. 5. It should, however, be noted that since a virtual direct current link section is present in the virtual DC link method, six modes in which the input and the output are connected in the form of 1 : 1 (modes 6, 8, 12, 16, 20, and 22 in the table of Fig. 5) are not once created, there is no problem in terms of control.

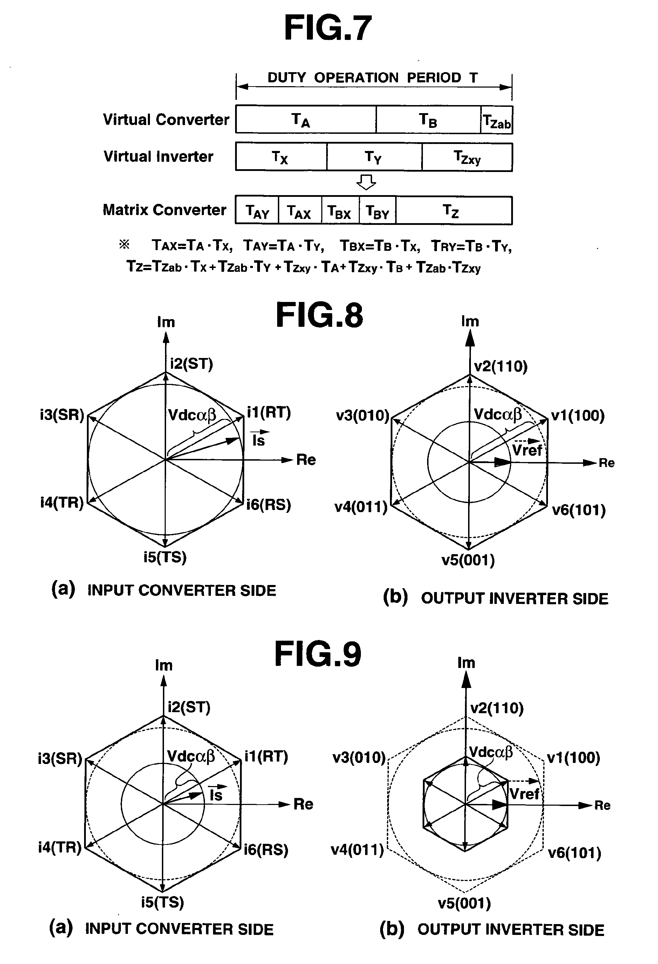

Next, a duty command creation in the virtual DC link method and space vector modulation approach will be described. Fig. 6 shows states in which base vectors and their duties in arbitrary one of the sectors defined in Fig. 2. It should be noted that base vectors are vectors which can actually be outputted and forms a hexagon in Fig. 2 and arbitrary space vectors are averagely created by determining duties thereof. In Fig. 6, suppose that the duty of an input first base vector im is A, the duty of an input second base vector in is B, the duty of an output first base vector vi is X, and an output second base vector vj is Y. The base vector, in a advancing direction, with respect to a counterclockwise direction, is the first base vector and, in a retarding direction, is the second base vector. Values of m, n, i, and j are varied in synchronization with a transfer in the sectors. Suppose that final duties which are the synthesis of the input and corresponding output are expressed respectively by multiplying respective input duties by respectively corresponding output duties as AX, AY, BX, and BY shown in Fig. 7. It should be noted that a duty Z of the base vector of a zero voltage after the synthesis is derived by Z = 1 - (AX + AY + BX + BY) and corresponds to a total sum of the duties when either one of the input or the output is the base vector of zero voltage. Various calculation methods of these duties are present. Rates of A, B, X, Y, and Z are determined in an instantaneous duty operation period. For example, in Fig. 7, in a case where an on duty of vector A is 1/3 per period and the on duty of vector X is 1/3 per period, a distribution of duty pulses is resulted in the on duty of vector AX of the virtual converter as being 1/9 per period.

Basically, the control for the AC-AC direct conversion device may be carried out thinking that conventionally available ordinary current source converter and voltage source inverter are operated. Hence, the control is carried out while the voltage of a virtual direct current link section of the virtual converter providing a maximum voltage obtained from three-phase input line voltages as a constant value (, in a 200-volt system, 200 x $\sqrt{2}$ x $\sqrt{3}/2$ = virtual direct current

EP 2 031 746 A1

voltage of about 245 volts during the control of power factor of one (1)) and output line voltages provide sinusoidal waves in the generally available PWM control using the virtual direct current voltage. Therefore, if this matter is expressed in the space vectors, as shown in Fig. 8, an input current command vector is controlled in a maximum circle locus in the Hexagon and the input line voltages are most efficiently utilized so that its phase of the input current command vector is matched with that of an input power supply phase voltage if the power factor is controlled to provide " 1 ". On the other hand, in the case of an output voltage command vector, magnitude (radius) and frequency (phase) of its vector circle locus are arbitrarily controlled. Through the synthesis of the duties obtained through the control described above, the AC-AC direct current conversion device can control input and output waveforms to be the sinusoidal wave.

As described above, the conventional control method has been described. In the conventional methodologies, the virtual direct current voltage is always sliced as a theoretically maximum value constant and the PWM control is carried out, irrespective of the magnitude of the command voltage desired to be outputted. Therefore, in a low voltage output region, pulses having narrow widths and having large voltage magnitude differences are frequently outputted and, thus, the low output voltage region is susceptible to a problem of a minimum on-pulsewidth and to a voltage error due to an influence of a dead time. In addition, an influence of higher harmonics due to a large voltage drop occurs in this output region. On the other hand, in a high voltage output region, an interval of time during which a zero voltage output having the large voltage drop becomes long.

Especially, in an extremely low voltage output region, the influence of the above-described voltage error becomes remarkable and a pulse output performance is degraded. Hence, if a motor is driven, several problems become easy to occur in a low speed region of the motor. In a V/f control and so forth, an influence of the voltage error in a whole voltage region is easy to occur and the whole voltage region is susceptible to the dead time.

On the other hand, in non-patent document 2, the PAW control method is adopted in the virtual converter. The virtual PAM control is carried out in the configuration of the virtual converter. This PAM control technique has been discussed in the carrier comparison approach and cannot be expanded to the space vector modulation approach.

It is an object of the present invention to provide an input/output duty control method for the AC-AC direct conversion device wherein, in a virtual input converter, a switching pattern is created by a combination of a 2n number of base vectors and an n number of zero voltage vectors and, in a virtual output inverter, another switching pattern is created by 2 + 2n kinds of base vectors including two zero voltage vectors, respective bi-directional switches are controlled by a still another switching pattern which is a synthesis of these patterns, which is capable of reducing an output voltage error and a fluctuation drop of a pulse voltage, achieving a reduction of the higher harmonics, reducing a common mode voltage giving an ill influence on equipment noises, and is capable of improving the minimum on pulsewidth in the low voltage region.

The present invention has feature of the following methods to solve the above-described problems.

(1) An n-phase AC-AC direct conversion device wherein, in a virtual input converter, a switching pattern by a combination of an 2n number of base vectors via which mutually different arbitrary input phases are connected to a P side of a virtual direct current link and an N side thereof and an n number of zero voltage vectors via which the same phases are connected to the P side and N side is created, in a virtual output inverter, a switching pattern is created by 2 + 2n kinds of base vectors including two zero voltage vectors, and respective bi-directional switches are controlled with a switching pattern which is a synthesis of these switching patterns, characterized in that three of the base vectors having instantaneous values near an output line voltage command are selected for an input current command vector of the virtual input converter and a magnitude of a virtual direct current voltage is controlled.

(2) The method characterized in that the base vectors are selected from base vectors of an input maximum line voltage, a second largest input intermediate line voltage, a third largest input intermediate line voltage, and a zero voltage.

(3) The method characterized in that a voltage output region is divided into a low voltage output region and a high voltage output region according to a magnitude of the input current command vector and the input current command vector is constituted by the base vectors which are different according to the voltage output region.

(4) The method characterized in that, in the low voltage output region, the input current command vector is constituted using the base vectors of the input intermediate line voltages and the zero voltage without use of the input maximum line voltage.

(5) The method characterized in that, in the high voltage output region, the input current vector is constituted using the base vectors of the input maximum line voltage and the input intermediate line voltages without use of the base vector of the zero voltage.

(6) The method characterized in that, in addition to a control for a magnitude of the virtual direct current voltage, a PWM control is performed in the virtual output inverter in order for the input and output to provide waveforms of sinusoidal waves and in order for a number of divisions of a duty pulse in one operation period to be decreased

(7) The method characterized in that, in the virtual input inverter, the input current command vector is constituted by the base vectors of the input maximum line voltage, a second largest input intermediate line voltage, a third largest input intermediate line voltage, and the zero voltage and the magnitude of the virtual direct current voltage in the high

4

voltage output region is controlled for the input current command vector to be constant at a maximum circle locus.

(8) The method characterized in that, in a determination of the switching pattern to control the virtual direct current voltage, the base vector of the zero voltage connected to an input intermediate phase is used.

**Effects of the invention:**

As described hereinabove, in the AC-AC direct conversion device according to the present invention wherein, in the virtual input converter, the switching pattern is created by the combination of the 2n number of base vectors and the n number of zero voltage vectors, in the virtual output inverter, the other switching pattern is created by the combination of the 2+2n kinds of voltage vectors including two zero voltage vectors, and respective bi-directional switches are controlled with the still other switching pattern which is a synthesis of the former two switching patterns, the input/output duty control method can reduce the output voltage error and reduce the fluctuation drop of the pulse voltage, can achieve the reduction in the higher harmonics, can reduce the common mode voltage which gives the ill influence on equipment noise, and can improve the minimum on pulsewidth in the low voltage region.

**BEST MODE FOR CARRYING OUT THE INVENTION**

(Basic explanation of controlling method)

First, a basic PAM control will be described. Figs. 8 and 9 show examples of PWM controlled and PAM controlled space vectors. Both of final output voltage command and frequency command are deemed to have an equivalence relation. In the PWM method, with the vector circle locus of the virtual input converter as constant at maximum, the magnitude of the circle is controlled in the virtual output inverter. On the other hand, since, in the PAM control, the magnitude of the vector circle locus of the virtual input converter is controlled, the Hexagon of the virtual output inverter is thought to be varied with the control of the magnitude of the vector circle locus in the virtual input converter. Thus, the virtual output inverter is controlled to always draw a maximum vector circle locus.

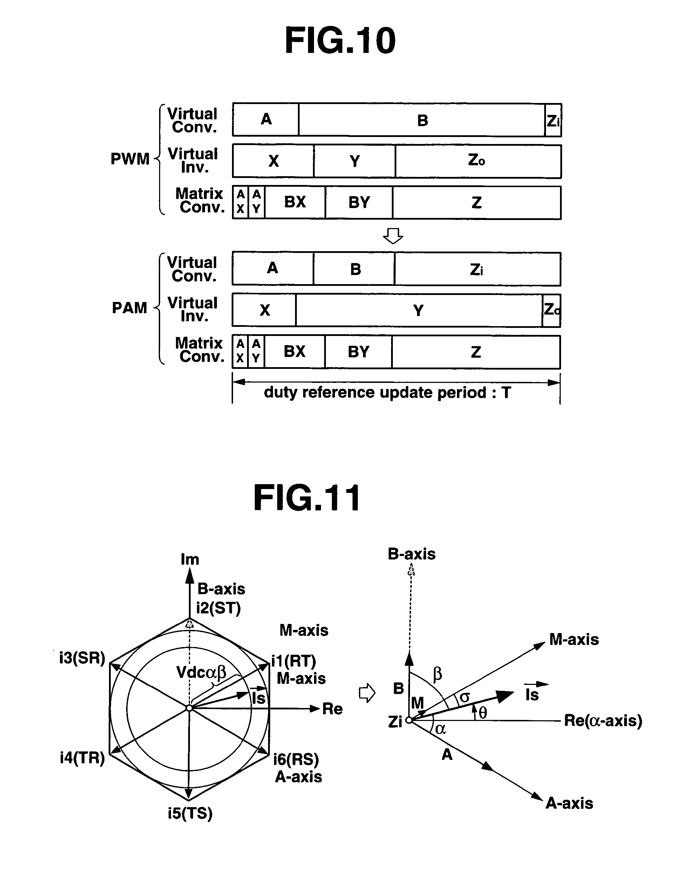

Fig. 10 shows examples of distribution rates of duty on pulse commands within one operation period T (it should be noted that an alignment order has no relation) in both of PWM method and PAM method. It is appreciated that, when comparing with each other, the distributions of the duty on pulse command between the virtual input converter and the virtual output inverter are just replaced with each other. However, since the final output commands as the virtual converter are not changed in either of the controlling methods, duty pulse distributions of AC-AC direct conversion circuit 3 after the synthesis is not changed. In other words, this is, to be the last, a mere replacement of the virtual converter control technique. Only the application of the ordinary PAM control to the virtual converter cannot give any improvement effect for the PWM control technique.

Causes of above-described no any improvement for the PWM control technique will herein be considered. Naturally, in the PAM control, the direct current voltage is controlled in accordance with an output voltage command value. Similarly in the virtual input converter, the direct current may be controlled in accordance with the output line voltage command value. However, since the direct current voltage described herein is, persistently, the virtual direct current voltage, in an actual matter of fact, input line voltages on the base vectors in the virtual input converter are momentarily varied with their duties allocated thereto. For example, when the input current command vector is present in an input sector I, RS phase and RT phase which are line voltages on the two base vectors and a zero voltage vector are mutually switched and applied to the virtual direct current link section. During their link intervals, the two base vectors of the line voltages and the zero voltage vector are connected to the virtual direct current section while being sliced at a high speed at duty ratios within the duty operation period.

With the above-described matter in mind, a region enclosed with Re axis and i1(RT) in Fig. 9 will be exemplified. Since, in this region, a magnitude relationship of three-phase input phase voltage instantaneous values is such as R phase > 0 > S phase > T phase, the line voltages on the above-described base vectors have such a relationship that RT phase indicates a maximum line voltage and RS phase indicates a second largest line voltage. This relationship can be applied equally well to the PAM control in Fig. 9 and the PWM control in Fig. 8. That is to say, in the space vector definitions in Fig. 8 and Fig. 9, the maximum line voltage and the second largest line voltage are always sliced to generate the output voltage. Hence, even though the virtual control methods are mutually different, the distribution rates of the synthesized duties are not changed if the input line voltages which are sources for the slicing are the same.

At this time, attention is paid to the base vectors constituting the virtual direct current voltage in the PAM control. As is different from the technique (hereinafter, called a three-vector system) in which the base vectors are constituted by three vectors of the input maximum line voltage, the second largest input intermediate voltage, and the zero voltage as described above in the ordinary PWM method and the ordinary PAM method, in a virtual PAM control method proposed in the present invention, four base vectors of the input maximum line voltage, the second largest input intermediate line voltage, the third largest input intermediate line voltage, and the zero voltage are adopted to constitute the space vectors. From among the four base vectors, three base vectors having the instantaneous values near the line voltage command to be outputted are selected (herein, called a new three-vector system) and the virtual direct current voltage is controlled to the magnitude of the output line voltage command.

Fig. 11 shows an example of the space vector of the new vector system. In Fig. 11, the base vector of the input maximum line voltage is set onto an M-axis, the base vector of input intermediate line voltage 1 is set onto an A-axis, the input intermediate line voltage 2 is set onto a B-axis, and their duties are set respectively to " M, A, B ". It should be noted that input intermediate line voltage 1 is an intermediate voltage which is more retarded with respect to a counterclockwise direction of the axis viewed from Fig. 11, and input intermediate line voltage 2 is an intermediate voltage which is more advanced with respect to the counterclockwise direction, and the magnitude relationship between input intermediate line voltages 1 and 2 are different according to a region as will be described later. A zero voltage duty is assumed to be Zi. The base vectors to be applied as these M-axis, A-axis, and B-axis are moved in synchronization with state of the input current command vector while a relative positional relationship is maintained. It should also be noted that an angle formed between input current command vector in the stationary $\alpha \beta$ coordinates system and M-axis is $\sigma$, an angle formed between the input current command vector therein and A axis is $\alpha$, an angle formed between the input current command vector therein and B axis is $\beta$, and an angle formed between the input current command value therein and $\alpha$ axis is $\theta$ (-$\pi \leqq \theta \leqq \pi$). Hereinafter, the details thereof will be explained for each of preferred embodiments.

(Embodiment 1)

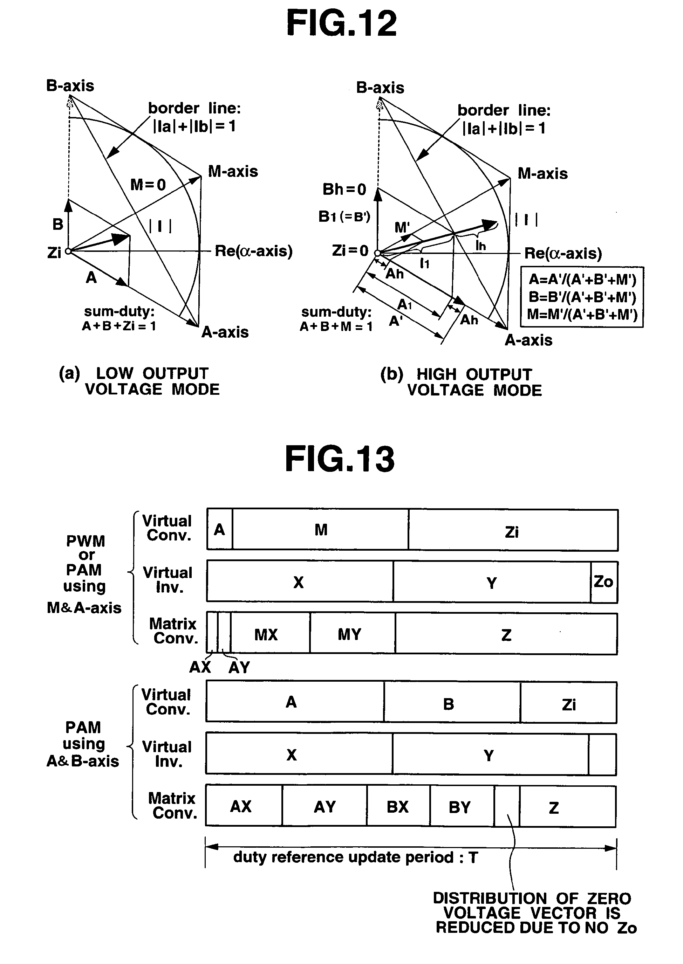

In Fig. 11, input current command vector Is is normalized by an amplitude (a peak value) of each input line voltage and its magnitude |I| thereof is defined (it should be noted that 0 < |I| < $\sqrt{3}/2$ ). This magnitude |I| corresponds to a radius of the vector circle locus. If components of this |I| resolved into the A-axis direction and B-axis direction are |Ia| and |Ib|, respectively, a straight line of |Ia| + |Ib| = 1 as shown in Fig.12 can be drawn. Suppose that, with this straight line as a border line, regions are divided into a region of |Ia| + |Ib| $\leqq$ 1 and a region of |Ia| + |Ib| > 1.

In this embodiment, a method of creating a virtual PAM space vector will be described when the input current command vector of |Ia| + | Ib| $\leqq$ 1 is small (= a low output voltage range in which the virtual direct current voltage is low, namely, in the low output voltage region).

Since, in the low voltage output region, the amplitude of the output line voltage command value is small, a rate at which the zero voltage vector is outputted becomes reduced in a case where the input current command vector is constituted by the three vectors of input intermediate line voltage 1, input intermediate line voltage 2, and the zero voltage vector without use of the base vector which provides the input maximum line voltage giving a large voltage high-low magnitude difference with respect to its output voltage.

For example, suppose that the input current command vector in a state of Fig. 12(a) is given. A duty distribution example in a case where the PWM control or the PAM control through the conventional three vector system carried out using the M-axis and the A-axis is shown in an upper stage of Fig. 13 and the duty distribution example of the PAM control in which the new three-vector system is carried out using the A axis and the B axis in this embodiment is shown in a lower stage of Fig. 13. As appreciated from the input duty distribution examples, the output intervals of zero voltage vectors Zi are largely different from each other even if the same input current command vectors are provided and it will be appreciated that the duty pulses are effectively utilized even in the duty after the synthesis. As shown in AX and AY placed in the upper stage of Fig. 13 in the conventional system, pulsewidth themselves tend to become narrower. However, in the actual equipment, in order to maintain the continuation of the output load current and to prevent the input power supply short-circuiting, it is necessary to set an overlap commutation time corresponding to several microseconds and the minimum on pulsewidth is limited due to the influence of the overlap commutation time.

Hence, such narrow pulsewidths as AX and AY shown in the upper stage of Fig. 13 in the conventional system are susceptible to the voltage error since the pulses themselves are not reflected on the switching states in the actual equipment. In the techniques of the preferred embodiment, the rate of the widths of the respective duty pulses is increased and the rate of the zero voltage is decreased. Hence, it becomes possible to output pulses to some degree even in an extremely low voltage output region. A performance improvement in the low voltage output region is achieved and an effect of a reduction in the voltage error can be achieved. In addition, since the input intermediate voltage phase is positively utilized, the input voltage in the state near an output voltage command instantaneous value is used and the effect of the reduction in the higher harmonics can be expected. In other words, as compared with the system of this embodiment, since the maximum voltage having the narrow width and the large voltage drop is always sliced in the conventional system, the conventional system is disadvantageous in terms of the voltage error and the higher harmonics.

It should be noted that the duty in the low voltage output region according to the technique in this embodiment can be calculated in the following equation (1).

## [Equation 1]

$$If : |Ia| + |Ib| \leq 1$$

$$A = |Ia| = \frac{2\sqrt{3}}{3} \bullet \sin \beta \bullet |I|$$

$$B = |Ib| = \frac{2\sqrt{3}}{3} \bullet \sin \alpha \bullet |I|$$

$$Zi = 1 - (A + B)$$

$$M = 0$$

$$\cdots (1)$$

In addition, angles of $\alpha$ and $\beta$ have the following relationship.

## [Equation 2]

$$\alpha + \beta = \frac{2}{3}\pi \qquad \cdots(2)$$

(Embodiment 2)

The input duty (cycle) determination method in a high voltage output region in the virtual PAM control as shown in Fig. 12(b) in embodiment 2 has been proposed.

As shown in Fig. 12(b), in the high voltage output region (maximum RT > intermediate RS > intermediate ST > 0 and |Ia| + |Ib| > 1), the virtual direct current voltage also becomes high. On the contrary to embodiment 1, it is desirable to represent the input current command vector only by base vectors on A-axis and B-axis of the input intermediate line voltage, and base vector M axis of the input maximum line voltage without use of zero voltage vector Zi. It should be noted that if, as in the case of conventional PAM/PWM control method, the input current command vector is tried to be represented only by M-axis and A-axis, it is necessary to fill in the remaining period with the zero voltage vector. Hence, in this embodiment, the duty is represented to provide 1 by addition using a combination of two input intermediate line voltages and the input maximum line voltage.

The duty determination method in the high voltage output region will be described. With the problems of the higher harmonics and so forth taken into consideration, the input current command vector may, preferably, be represented using the base vectors of the input intermediate line voltages if possible even in the high voltage output region. In order to utilize the input intermediate line voltages most efficiently, as shown in Fig. 12(b), input current command vector I is divided by the border line of |Ia| + |Ib| = 1 into a segment I1 corresponding to the low voltage output region and a segment Ih corresponding to the high voltage output region Ih Segment I1 corresponds to the command value in a state of A + B = 1 in the low voltage output region, namely, in a state where the input intermediate line voltages are mostly utilized. The remaining Ih is considered to be equivalent to the command vector which cannot be represented only by the A-axis and B-axis. The duty is calculated as follows with a distinction between I1 created from the A- axis direction and the B-axis direction and Ih created from the M-axis and the A-axis directions.

$$If : |Ia| + |Ib| > 1$$

$$|Il| = \frac{\sqrt{3}}{2(\sin\alpha + \sin\beta)}$$

$$|Ih| = |I| - |Il|$$

$$Al = \frac{|Ia|}{|Ia| + |Ib|} = \frac{\sin\beta}{\sin\alpha + \sin\beta}$$

$$Bl = \frac{|Ia|}{|Ia| + |Ib|} = \frac{\sin\alpha}{\sin\alpha + \sin\beta}$$

$$\begin{cases} Ah = \frac{2\sqrt{3}}{3} \bullet |\sin\sigma| \bullet |Ih| & only\ if : \alpha < \beta \\ Ah = 0 & only\ if : \alpha > \beta \end{cases}$$

$$\begin{cases} Bh = 0 & only\ if : \alpha < \beta \\ Bh = \frac{2\sqrt{3}}{3} \bullet |\sin\sigma| \bullet |Ih| & only\ if : \alpha > \beta \end{cases}$$

$$\begin{cases} M' = \frac{2\sqrt{3}}{3} \bullet \sin\alpha \bullet |Ih| & only\ if : \alpha < \beta \\ M' = \frac{2\sqrt{3}}{3} \bullet \sin\beta \bullet |Ih| & only\ if : \alpha > \beta \end{cases}$$

$$A' = Ah + Al$$

$$B' = Bh + Bl$$

$$A = \frac{A'}{A' + B' + M'}$$

$$B = \frac{B'}{A' + B' + M'}$$

$$M = \frac{M'}{A' + B' + M'}$$

$$Zi = 0$$

$$\cdots (3)$$

[Equation 4]

$$\begin{cases} \alpha + \sigma = \dfrac{1}{3} \bullet \pi & \qquad if: \alpha < \beta \\[4mm] \beta + \sigma = \dfrac{1}{3} \bullet \pi & \qquad if; \alpha > \beta \end{cases}$$

$$\cdots (4)$$

In equation (4), Al and Bl denote resolved component duties of I1, Ah, Bh, and M' denote resolved duties of Ih, A' and B' denote addition values of I1 and Ih resolved components, and these are provisional duties before a recalculation process. A, B, and M indicate final duties recalculated to provide an addition value of 1.

It should be noted that magnitude |I| of the input current command vector used in equations (1) through (4) is determined from an effective value |Vref| of output line voltage command Vref and normalized |I| is determined from equation (5) using input line voltage effective value |Vsl|.

## [Equation]

$$|I| = \frac{|Vref|}{|Vsl|}$$

$$\cdots (5)$$

$$where : 0 \leqq |I| \leq \frac{\sqrt{3}}{2}$$

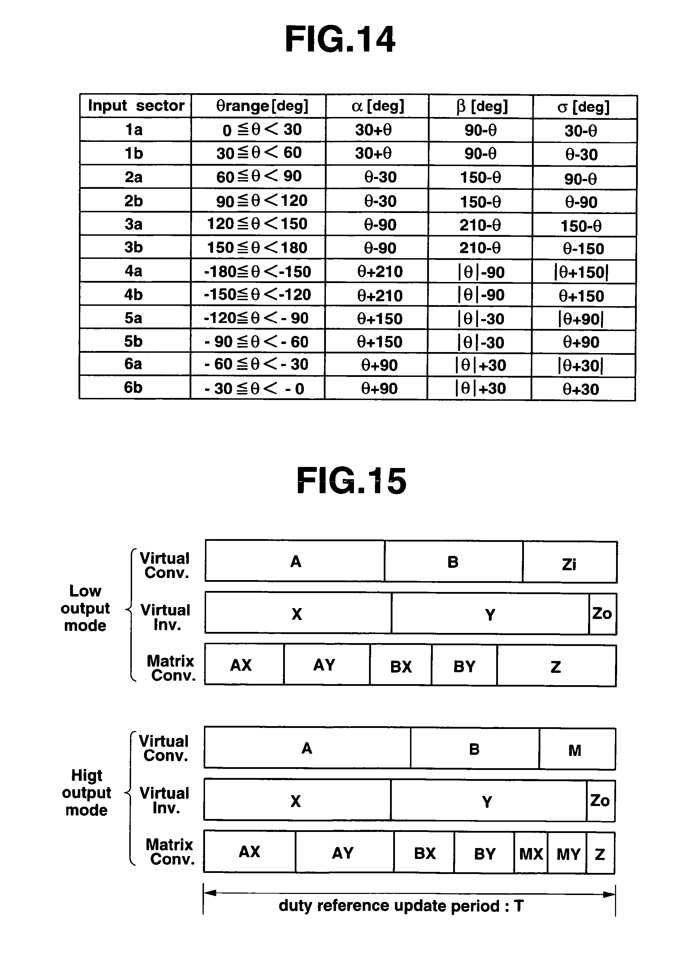

In addition, the values of sin α, sinβ, and sin σ are switched in accordance with the input sector states. It should be noted that, using phase θ (α-axis basis) of the input current command vector, α,β ,and σ are tabled as shown in Table of Fig. 14 and the input duties are determined by substituting the values of α,β, and σ into equations (1) through (4). It should be noted that phase θ is made coincident with the phase of a power supply phase voltage in a case of power factor 1 control.

According to the embodiment 1, the improvement in the voltage error and the reduction of the higher harmonics can be made in the high voltage output region as compared with the conventional method.

(Embodiment 3)

In the ordinary PAM control, the direct current voltage is controlled by the input side converter and only the frequency command is given to the output side inverter. If the same thing is applied to the virtual PAM control proposed in each of embodiments 1 and 2, the output side inverter is only the frequency output command. Hence, the locus of the output voltage command vector draws the Hexagon in Fig. 9. If the PAM control is carried out for the output side inverter only through the frequency command without change, ripple components are naturally included in the output voltage. On the other hand, the magnitude of the input current command vector is adjusted in accordance with the output frequency command and magnitude of the Hexagon itself is variable in accordance with the ripple components. At this time, the output voltage command vector draws the circle locus to obtain a sinusoidal wave output. The ripple components of the Hexagon are transmitted to the input current command vector. As a result of this, the input current cannot strictly be formed as the sinusoidal wave.

Therefore, in this embodiment, to achieve both of the input waveform and output waveform to provide the sinusoidal waves, in addition to the virtual PAM control of each of embodiments 1 and 2, in the virtual output inverter, the PWM control is performed in the conventional way. The PWM control of the virtual output inverter, at this time, may be carried out by an addition of a small quantity of the zero voltage vector. Hence, as compared with the conventional system in which all of the input and the output side converter and inverter are carried out only in the PWM control, the duty distribution quantity for the zero voltage vector is remarkably decreased. Fig. 15 shows the corresponding duty distribution examples in the respective regions in this embodiment.

According to this embodiment, in addition to the effect of each of embodiments 1 and 2, an interval of time during which the zero voltage is outputted can be shortened as remarkably as possible and the input and output side sinusoidal waves can be achieved.

(Embodiment 4)

In embodiment 2, the input current command vector of the virtual input converter constitutes the duty in one operation period using the new three-vector system in the high voltage output region. In addition, in embodiment 3, in the output voltage command vector of the virtual output inverter, the slight amount of zero voltage vector is added while the PWM control is performed in the virtual output inverter. The synthesized duty distribution result in the high output voltage region indicates seven kinds of pulses as shown in a lower stage of Fig. 15.

On the other hand, in the conventional three-vector PWM system and in the virtual PAM control in the low voltage output region in embodiment 1, five kinds of vectors as shown in the upper stage of Fig. 15 constitutes the output voltage vector in the conventional way. Hence, in the virtual PAM control in the high voltage output region in embodiment 2, the number of times by which the switches are changed is increased by twice as compared in one operation period. This can provide a concerned matter in the voltage error due to increases in a switching loss and in the number of times by which the influence of dead time receives.

Therefore, in this embodiment, the system in the case of embodiment 1 and the conventional PWM method are controllably switched according to the output voltage region. Thus, in the low voltage output region, the system described in embodiment 1 is adopted to reduce the voltage error and to reduce the higher harmonics and, in the high voltage output region, returning to the PWM control method, the sinusoidal waves appear on its input and output sides. At this time, such a control that, taking a priority for the reduced number of divisions in one operation period for the synthesized duty pulses, the number of times the influence of the dead time is received is decreased, can be achieved.

It should be noted that the border line of switching these controls is the straight line expressed as |Ia| + |Ib| = 1 described in embodiments 1 and 2.

(Embodiment 5)

This embodiment achieves an optimization of a switching table in a case where the virtual PAM control proposed in each of embodiments 1 and 2 is carried out.

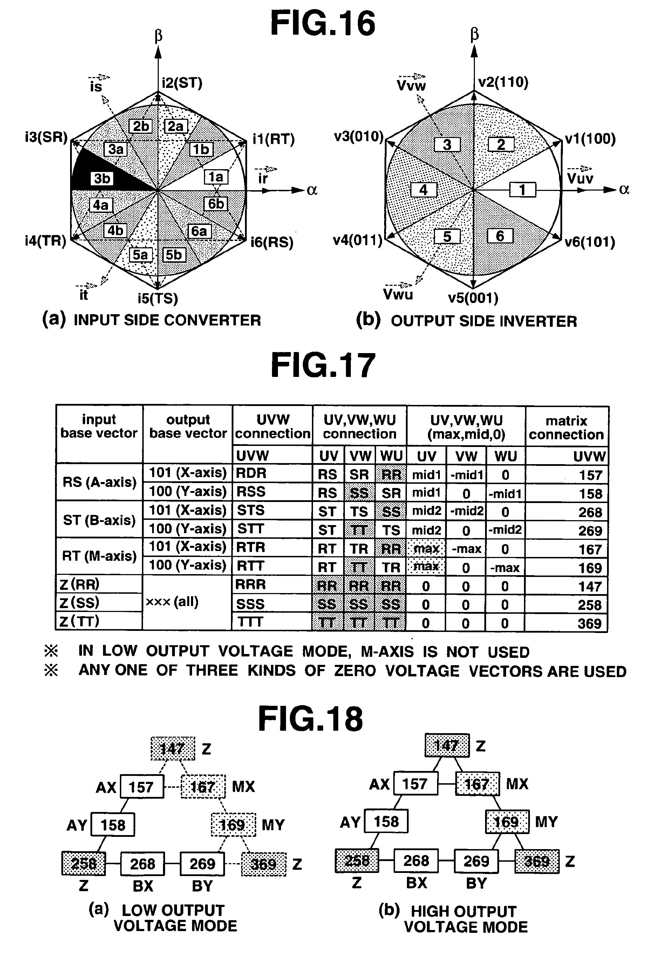

First, Fig. 16 shows input/output space vector sector definitions in the virtual PAM control. In the input side converter, the input U-phase voltage (which is coincident with the input U-phase current) placed on α axis. The new three vector system has been adopted. Hence, the sector is considered to be divided into twelve. For example, sector 1a or 1b is a region in which input line voltage RT provides the maximum line voltage and, in sector 1a, the relationship between the two input intermediate line voltages RS and ST is RS > ST. In sector 1b, RS < ST. In the same way for the other sectors, in α-side sectors have the relationship of A axis > B axis and, in b-side sectors have the relationship of A axis < B axis. The distribution of α-side sectors and b-side sectors have relations in equations (3) and (4). For switching tables which will be described herein, this distinctions are not so important and substantial six divided sectors may be considered. It should, however, be noted that it is necessary to determine a low voltage output mode and a high voltage output mode for each of the sectors using the border line of |Ia| + |Ib| = 1 (dot lines in Fig. 16(a).

In the output side inverter, UV line voltage command is placed on α axis. Then, in the conventional manner, the sectors are defined by the three vectors system. In the virtual PAM control, the maximum circle locus at the instantaneous Hexagon is drawn.

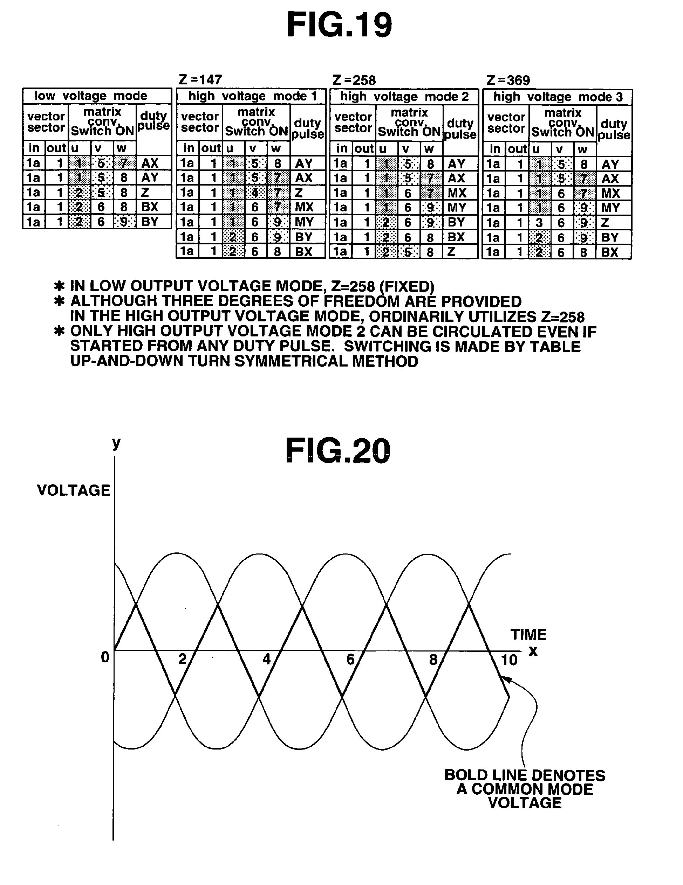

Hereinafter, a case where the input/output sectors in Fig. 16 are " 1a - 1 " is extracted will be explained. First, an array which can prevent a simultaneous switching of two phase or more within a control period is considered. If the duties of the input M axis, the input A axis, and the input B axis are " M, A, B ", the duties of output first and second base vectors are " X, Y ". All of synthesized combinations are listed in Table of Fig. 17. Three kinds of zero voltage base vectors from nine kinds of base vectors are listed and any one kind of the three kinds of zero voltage vectors is selected and used. Fig. 18 shows a connection diagram of the switches in the virtual PAM control sector 1a - 1. Although a direction and a start location are arbitrary, if the switches are changed in an order connected, the switched of two phase or more are prevented from being simultaneously switched and the number of times the change-over occurs can be minimized. During the low voltage output mode, the M axis base vectors are not used. Thus, in this mode, the duty pulses of only AX → AY → Z → BX → BY and the zero voltage vector is limited to a pattern of " 2, 5, 8 " in which an output phase connection is connected all to S phase. On the other hand, since, during the high voltage output in Fig. 18(b), the loop is formed, Hence, even though any of the zero voltage vectors is used, a minimization table of the switch change-over can be configured. Table of Fig. 19 shows pulse patterns at that instant. In every mode of Fig. 19, using a switching order of a turn back symmetrical method (a change-over order of the switches is turned back at an uppermost stage and a lowest stage (up → down, down → up) is prerequisite. As far as a high voltage output mode 2 is concerned, a circulation is possible without the turn back (since there is no simultaneous switching even if a jump up between the uppermost stage and the lowest stage is carried out and the mode transfer between the uppermost stage and the lowest stage is carried out). Hence, there is no problem of starting from any duty pulse. In any other modes than the other, the change-over of the switches is needed to be start from the uppermost stage or from the lowest stage.

Next, a reduction in a common mode voltage will herein be discussed. The common mode voltage is always a phase in which the input voltage value is intermediate from among the three phases (hereinafter, input intermediate phase) as denoted by a bold line in Fig. 20. In order to reduce the common mode voltage, it is desirable to output the zero voltage in the input intermediate phase. Since in the input/output sectors of " 1a - 1 ", the input intermediate phase is S phase, Z = " 2, 5, 8 " should be used. As appreciated from Table of Fig. 19, the zero voltage vector is naturally fixed to Z = " 2, 5, 8 " since the input intermediate phase is utilized in the low voltage output mode. In addition, in the high voltage output mode, a degree of freedom in a selection of Z is provided. In this case, in a steady state mode, high voltage output mode 2 (Z = " 2, 5, 8 " ) may be used. Even during a transient time of a sector transfer, in high voltage output mode 2, the table can be circulated. Hence, an active modification of a start position in the circulating table can prevent the simultaneous change-over of the switches of two phases or more (in the case of the low output mode, it is impossible due to the fixation of the table).

As described above, in input/output sectors " 1a - 1 ", it is appreciated that a steady use of " Z = " 2, 5, 8 " can achieve the reduction of the common mode voltage and the minimization of the number of times the switches are changed. In the same way as any other sectors, the switching table is determined. Hence, the use of the zero voltage vector achieves the reduction of the common mode voltage and the optimization of the number of times the switches are changed.

Hence, according to embodiment 5, the switching pattern can be optimized, the common mode voltage can be reduced, and the number of times the switches are changed can be reduced.

## BRIEF DESCRIPTION OF THE DRAWINGS

[Fig. 1] are equivalent circuit diagrams of an AC-AC direct conversion device in a virtual DC link method
[Fig. 2] are diagrams of space vector sectors and base vectors.
[Fig. 3] are tables of switching patterns of virtual input converter and virtual output inverter.
[Fig. 4] are tables of results of synthesis of virtual switching patterns.
[Fig. 5] is a table of switching modes of 27 patterns.
[Fig. 6] are relation diagrams of input and output vectors and duties.
[Fig. 7] is a diagram of a pulse creation interval of time in one switching period.
[Fig. 8] are space vector diagrams (PWM) in the virtual DC link method.
[Fig. 9] are space vector diagrams (PAM) in the virtual DC link method.
[Fig. 10] are duty distribution comparison diagrams between PWM and PAM with no countermeasure for an input intermediate line voltage.
[Fig. 11] are input side base vector diagrams used in a virtual PAM control.
[Fig. 12] are vector diagrams in the virtual PAM depending upon a region.
[Fig. 13] are duty distribution examples of respective regions in the PAM utilizing positively the input intermediate line voltages.
[Fig. 14] is a table of $\alpha$, $\beta$, and $\sigma$ in respective input sectors.
[Fig. 15] are duty distribution examples of respective regions in input intermediate line voltage positively utilizing PAM.
[Fig. 16] are space vector sector diagrams in the virtual PAM control.
[Fig. 17] is a table of switch connections in the virtual PAM control.
[Fig. 18] are diagrams for switching connections in the virtual PAM control.
[Fig. 19] are pulse pattern tables in virtual PAM sector of " 1a - 1 ".
[Fig. 20] is a variation in a common mode voltage when an input intermediate phase is set to a zero voltage vector.
[Fig. 21] is a basic configuration diagram of an AC-AC direct conversion device.

### Claims

1. An input/output duty control method for an n-phase AC-AC direct conversion device wherein, in a virtual input converter, a switching pattern by a combination of an 2n number of base vectors via which mutually different arbitrary input phases are connected to a P side of a virtual direct current link and an N side thereof and an n number of zero voltage vectors via which the same phases are connected to the P side and N side is created, in a virtual output inverter, a switching pattern is created by 2 + 2n kinds of base vectors including two zero voltage vectors, and respective bi-directional switches are controlled with a switching pattern which is a synthesis of these switching patterns, comprising : selecting three of the base vectors having instantaneous values near an output line voltage command for an input current command vector of the virtual input converter; and controlling a magnitude of a virtual direct current voltage.

2. The input/output duty control method for the n-phase AC-AC direct conversion device as claimed in claim 1, wherein the base vectors are selected from base vectors of an input maximum line voltage, a second largest input intermediate line voltage, a third largest input intermediate line voltage, and a zero voltage.

**3.** The input/output duty control method for the n-phase AC-AC direct conversion device as claimed in either claim 1 or 2, wherein a voltage output region is divided into a low voltage output region and a high voltage output region according to a magnitude of the input current command vector and the input current command vector is constituted by the base vectors which are different according to the voltage output region.

**4.** The input/output duty control method for the AC-AC direct conversion device as claimed in claim 3, wherein, in the low voltage output region, the input current command vector is constituted using the base vectors of the input intermediate line voltages and the zero voltage without use of the input maximum line voltage.

**5.** The input/output duty control method for the AC-AC direct conversion device as claimed in claim 3, wherein, in the high voltage output region, the input current vector is constituted using the base vectors of the input maximum line voltage and the input intermediate line voltages without use of the base vector of the zero voltage.

**6.** The input/output duty control method for the AC-AC direct conversion device as claimed in any one of the preceding claims 1 through 3, wherein, in addition to a control for a magnitude of the virtual direct current voltage, a PWM control is performed in the virtual output inverter in order for the input and output to provide waveforms of sinusoidal waves and in order for a number of divisions of a duty pulse in one operation period to be decreased.

**7.** The input/output duty control method for the AC-AC direct conversion device as claimed in either claim 4 or 6, wherein, in the virtual input inverter, the input current command vector is constituted by the base vectors of the input maximum line voltage, a second largest input intermediate line voltage, a third largest input intermediate line voltage, and the zero voltage and the magnitude of the virtual direct current voltage in the high voltage output region is controlled for the input current command vector to be constant at a maximum circle locus.

**8.** The input/output duty control method for the AC-AC conversion device as claimed in any one of the preceding claims 1 through 7, wherein, in a determination of the switching pattern to control the virtual direct current voltage, the base vector of the zero voltage connected to an input intermediate phase is used.

# FIG.1

# FIG.2

(a) INPUT CONVERTER SIDE

(b) OUTPUT INVERTER SIDE

# FIG.3

## (a) Virtual Converter

| Base Vector | Input to virtual DC | Switch ON (virtual) | |
|---|---|---|---|
| i1 | pn=rt | S1 | S6 |
| i2 | pn=st | S3 | S6 |
| i3 | pn=sr | S3 | S2 |
| i4 | pn=tr | S5 | S2 |
| i5 | pn=ts | S5 | S4 |
| i6 | pn=rs | S1 | S4 |
| i0r | pn=rr | S1 | S2 |
| i0s | pn=ss | S3 | S4 |
| i0t | pn=tt | S5 | S6 |

## (b) Virtual Inverter

| Base Vector | virtual DC to output | Switch ON (virtual) | | |
|---|---|---|---|---|
| v1 | UVW=pnn(100) | S7 | S10 | S12 |
| v2 | UVW=ppn(110) | S7 | S9 | S12 |
| v3 | UVW=npn(010) | S8 | S9 | S12 |
| v4 | UVW=npp(o11) | S8 | S9 | S11 |
| v5 | UVW=nnp(001) | S8 | S10 | S11 |
| v6 | UVW=pnp(101) | S7 | S10 | S11 |
| v0 | UVW=nnn(000) | S8 | S10 | S12 |
| v7 | UVW=ppp(111) | S7 | S9 | S11 |

# FIG.4

| Base Vector | | Matrix Conv. Switch ON | | | Base Vector | | Matrix Conv. Switch ON | | |
|---|---|---|---|---|---|---|---|---|---|
| In | Out | | | | In | Out | | | |
| i1 | v1 | 1 | 6 | 9 | i4 | v1 | 3 | 4 | 7 |
| i1 | v2 | 1 | 4 | 9 | i4 | v2 | 3 | 6 | 7 |
| i1 | v3 | 3 | 4 | 9 | i4 | v3 | 1 | 6 | 7 |
| i1 | v4 | 3 | 4 | 7 | i4 | v4 | 1 | 6 | 9 |
| i1 | v5 | 3 | 6 | 7 | i4 | v5 | 1 | 4 | 9 |
| i1 | v6 | 1 | 6 | 7 | i4 | v6 | 3 | 4 | 9 |
| i2 | v1 | 2 | 6 | 9 | i5 | v1 | 3 | 5 | 8 |
| i2 | v2 | 2 | 5 | 9 | i5 | v2 | 3 | 6 | 8 |
| i2 | v3 | 3 | 5 | 9 | i5 | v3 | 2 | 6 | 8 |
| i2 | v4 | 3 | 5 | 8 | i5 | v4 | 2 | 6 | 9 |
| i2 | v5 | 3 | 6 | 8 | i5 | v5 | 2 | 5 | 9 |
| i2 | v6 | 2 | 6 | 8 | i5 | v6 | 3 | 5 | 9 |
| i3 | v1 | 2 | 4 | 7 | i6 | v1 | 1 | 5 | 8 |
| i3 | v2 | 2 | 5 | 7 | i6 | v2 | 1 | 4 | 8 |
| i3 | v3 | 1 | 5 | 7 | i6 | v3 | 2 | 4 | 8 |
| i3 | v4 | 1 | 5 | 8 | i6 | v4 | 2 | 4 | 7 |
| i3 | v5 | 1 | 4 | 8 | i6 | v5 | 2 | 5 | 7 |
| i3 | v6 | 2 | 4 | 8 | i6 | v6 | 1 | 5 | 7 |

# FIG.5

| Switching mode | Matrix Converter Switch ON | | | Connection UVW |
|---|---|---|---|---|
| Mode 1 | 1 | 4 | 7 | R R R |
| Mode 2 | 1 | 4 | 8 | R R S |
| Mode 3 | 1 | 4 | 9 | R R T |
| Mode 4 | 1 | 5 | 7 | R S R |
| Mode 5 | 1 | 5 | 8 | R S S |
| Mode 6 | 1 | 5 | 9 | R S T |
| Mode 7 | 1 | 6 | 7 | R T R |
| Mode 8 | 1 | 6 | 8 | R T S |
| Mode 9 | 1 | 6 | 9 | R T T |
| Mode 10 | 2 | 4 | 7 | S R R |
| Mode 11 | 2 | 4 | 8 | S R S |
| Mode 12 | 2 | 4 | 9 | S R T |
| Mode 13 | 2 | 5 | 7 | S S R |
| Mode 14 | 2 | 5 | 8 | S S S |
| Mode 15 | 2 | 5 | 9 | S S T |
| Mode 16 | 2 | 6 | 7 | S T R |
| Mode 17 | 2 | 6 | 8 | S T S |
| Mode 18 | 2 | 6 | 9 | S T T |
| Mode 19 | 3 | 4 | 7 | T R R |
| Mode 20 | 3 | 4 | 8 | T R S |
| Mode 21 | 3 | 4 | 9 | T R T |
| Mode 22 | 3 | 5 | 7 | T S R |
| Mode 23 | 3 | 5 | 8 | T S S |
| Mode 24 | 3 | 5 | 9 | T S T |
| Mode 25 | 3 | 6 | 7 | T T R |
| Mode 26 | 3 | 6 | 8 | T T S |
| Mode 27 | 3 | 6 | 9 | T T T |

# FIG.6

2nd Base Vector $\vec{in}$

$B \cdot \vec{in}$

$\vec{is}$

$A + B \leq 1$

$A \cdot \vec{im}$

1st Base Vector $\vec{im}$

(a) INPUT CONVERTER SIDE

2nd Base Vector $\vec{vj}$

$Y \cdot \vec{vj}$

$\vec{Vref}$

$X + Y \leq 1$

$X \cdot \vec{vi}$

1st Base Vector $\vec{vi}$

(b) OUTPUT INVERTER SIDE

# FIG.7

| DUTY OPERATION PERIOD T | | | |
|---|---|---|---|

| Virtual Converter | $T_A$ | $T_B$ | $T_{Zab}$ |
|---|---|---|---|

| Virtual Inverter | $T_X$ | $T_Y$ | $T_{Zxy}$ |
|---|---|---|---|

⇩

| Matrix Converter | $T_{AY}$ | $T_{AX}$ | $T_{BX}$ | $T_{BY}$ | $T_Z$ |
|---|---|---|---|---|---|

※  $T_{AX}=T_A \cdot T_X$,  $T_{AY}=T_A \cdot T_Y$,  $T_{BX}=T_B \cdot T_X$,  $T_{RY}=T_B \cdot T_Y$,

$T_Z=T_{Zab} \cdot T_X + T_{Zab} \cdot T_Y + T_{Zxy} \cdot T_A + T_{Zxy} \cdot T_B + T_{Zab} \cdot T_{Zxy}$

# FIG.8

(a)  INPUT CONVERTER SIDE

(b)  OUTPUT INVERTER SIDE

# FIG.9

(a)  INPUT CONVERTER SIDE

(b)  OUTPUT INVERTER SIDE

# FIG.10

duty reference update period : T

# FIG.11

EP 2 031 746 A1

# FIG.12

**(a) LOW OUTPUT VOLTAGE MODE**

B-axis

border line: |Ia|+|Ib| = 1

M-axis

M = 0

B

Zi — Re(α-axis)

A

| I |

sum-duty: A+B+Zi = 1

A-axis

**(b) HIGH OUTPUT VOLTAGE MODE**

B-axis

border line: |Ia|+|Ib| = 1

M-axis

Bh = 0

B1 (=B')

M'

Zi = 0 — Re(α-axis)

Ah

I1

Ih

| I |

A1

A'

Ah

sum-duty: A+B+M = 1

A-axis

$A = A'/(A'+B'+M')$
$B = B'/(A'+B'+M')$
$M = M'/(A'+B'+M')$

# FIG.13

| | | | | | | |
|---|---|---|---|---|---|---|
| **PWM or PAM using M&A-axis** | Virtual Conv. | A | M | | Zi | |
| | Virtual Inv. | X | | Y | | Zo |
| | Matrix Conv. | MX | MY | | Z | |

AX   AY

| | | | | | |
|---|---|---|---|---|---|
| **PAM using A&B-axis** | Virtual Conv. | A | B | Zi |
| | Virtual Inv. | X | Y | |
| | Matrix Conv. | AX | AY | BX | BY | Z |

duty reference update period : T

DISTRIBUTION OF ZERO VOLTAGE VECTOR IS REDUCED DUE TO NO Zo

19

# FIG.14

| Input sector | θrange[deg] | α [deg] | β [deg] | σ [deg] |
|---|---|---|---|---|
| 1a | $0 \leq \theta < 30$ | 30+θ | 90-θ | 30-θ |
| 1b | $30 \leq \theta < 60$ | 30+θ | 90-θ | θ-30 |
| 2a | $60 \leq \theta < 90$ | θ-30 | 150-θ | 90-θ |
| 2b | $90 \leq \theta < 120$ | θ-30 | 150-θ | θ-90 |
| 3a | $120 \leq \theta < 150$ | θ-90 | 210-θ | 150-θ |
| 3b | $150 \leq \theta < 180$ | θ-90 | 210-θ | θ-150 |
| 4a | $-180 \leq \theta < -150$ | θ+210 | $|\theta|$-90 | $|\theta+150|$ |
| 4b | $-150 \leq \theta < -120$ | θ+210 | $|\theta|$-90 | θ+150 |
| 5a | $-120 \leq \theta < -90$ | θ+150 | $|\theta|$-30 | $|\theta+90|$ |
| 5b | $-90 \leq \theta < -60$ | θ+150 | $|\theta|$-30 | θ+90 |
| 6a | $-60 \leq \theta < -30$ | θ+90 | $|\theta|$+30 | $|\theta+30|$ |
| 6b | $-30 \leq \theta < -0$ | θ+90 | $|\theta|$+30 | θ+30 |

# FIG.15

**Low output mode**

Virtual Conv.

| A | B | Zi |
|---|---|---|

Virtual Inv.

| X | Y | Zo |
|---|---|---|

Matrix Conv.

| AX | AY | BX | BY | Z |
|---|---|---|---|---|

**Higt output mode**

Virtual Conv.

| A | B | M |
|---|---|---|

Virtual Inv.

| X | Y | Zo |
|---|---|---|

Matrix Conv.

| AX | AY | BX | BY | MX | MY | Z |
|---|---|---|---|---|---|---|

duty reference update period : T

# FIG.16

(a) INPUT SIDE CONVERTER

(b) OUTPUT SIDE INVERTER

# FIG.17

| input base vector | output base vector | UVW connection | UV,VW,WU connection | | | UV,VW,WU (max,mid,0) | | | matrix connection |
|---|---|---|---|---|---|---|---|---|---|
| | | UVW | UV | VW | WU | UV | VW | WU | UVW |
| RS (A-axis) | 101 (X-axis) | RDR | RS | SR | RR | mid1 | -mid1 | 0 | 157 |
| | 100 (Y-axis) | RSS | RS | SS | SR | mid1 | 0 | -mid1 | 158 |
| ST (B-axis) | 101 (X-axis) | STS | ST | TS | SS | mid2 | -mid2 | 0 | 268 |
| | 100 (Y-axis) | STT | ST | TT | TS | mid2 | 0 | -mid2 | 269 |
| RT (M-axis) | 101 (X-axis) | RTR | RT | TR | RR | max | -max | 0 | 167 |
| | 100 (Y-axis) | RTT | RT | TT | TR | max | 0 | -max | 169 |
| Z(RR) | ××× (all) | RRR | RR | RR | RR | 0 | 0 | 0 | 147 |
| Z(SS) | | SSS | SS | SS | SS | 0 | 0 | 0 | 258 |
| Z(TT) | | TTT | TT | TT | TT | 0 | 0 | 0 | 369 |

※ IN LOW OUTPUT VOLTAGE MODE, M-AXIS IS NOT USED

※ ANY ONE OF THREE KINDS OF ZERO VOLTAGE VECTORS ARE USED

# FIG.18

(a) LOW OUTPUT VOLTAGE MODE

(b) HIGH OUTPUT VOLTAGE MODE

# FIG.19

**low voltage mode**

| vector sector in | out | matrix conv. Switch ON u | v | w | duty pulse |
|---|---|---|---|---|---|
| 1a | 1 | 1 | 5 | 7 | AX |
| 1a | 1 | 1 | 5 | 8 | AY |
| 1a | 1 | 2 | 5 | 8 | Z |
| 1a | 1 | 2 | 6 | 8 | BX |
| 1a | 1 | 2 | 6 | 9 | BY |

**Z = 147 — high voltage mode 1**

| vector sector in | out | matrix conv. Switch ON u | v | w | duty pulse |
|---|---|---|---|---|---|
| 1a | 1 | 1 | 5 | 8 | AY |
| 1a | 1 | 1 | 5 | 7 | AX |
| 1a | 1 | 1 | 4 | 7 | Z |
| 1a | 1 | 1 | 6 | 7 | MX |
| 1a | 1 | 1 | 6 | 9 | MY |
| 1a | 1 | 2 | 6 | 9 | BY |
| 1a | 1 | 2 | 6 | 8 | BX |

**Z = 258 — high voltage mode 2**

| vector sector in | out | matrix conv. Switch ON u | v | w | duty pulse |
|---|---|---|---|---|---|
| 1a | 1 | 1 | 5 | 8 | AY |
| 1a | 1 | 1 | 5 | 7 | AX |
| 1a | 1 | 1 | 6 | 7 | MX |
| 1a | 1 | 1 | 6 | 9 | MY |
| 1a | 1 | 2 | 6 | 9 | BY |
| 1a | 1 | 2 | 6 | 8 | BX |
| 1a | 1 | 2 | 5 | 8 | Z |

**Z = 369 — high voltage mode 3**

| vector sector in | out | matrix conv. Switch ON u | v | w | duty pulse |
|---|---|---|---|---|---|
| 1a | 1 | 1 | 5 | 8 | AY |
| 1a | 1 | 1 | 5 | 7 | AX |
| 1a | 1 | 1 | 6 | 7 | MX |
| 1a | 1 | 1 | 6 | 9 | MY |
| 1a | 1 | 3 | 6 | 9 | Z |
| 1a | 1 | 2 | 6 | 9 | BY |
| 1a | 1 | 2 | 6 | 8 | BX |

＊ IN LOW OUTPUT VOLTAGE MODE, Z=258 (FIXED)

＊ ALTHOUGH THREE DEGREES OF FREEDOM ARE PROVIDED
IN THE HIGH OUTPUT VOLTAGE MODE, ORDINARILY UTILIZES Z=258

＊ ONLY HIGH OUTPUT VOLTAGE MODE 2 CAN BE CIRCULATED EVEN IF
STARTED FROM ANY DUTY PULSE. SWITCHING IS MADE BY TABLE
UP-AND-DOWN TURN SYMMETRICAL METHOD

# FIG.20

VOLTAGE

BOLD LINE DENOTES A COMMON MODE VOLTAGE

**FIG.21**

| **INTERNATIONAL SEARCH REPORT** | | International application No. |
|---|---|---|
| | | PCT/JP2007/059689 |

**A. CLASSIFICATION OF SUBJECT MATTER**
*H02M5/293*(2006.01)i

According to International Patent Classification (IPC) or to both national classification and IPC

**B. FIELDS SEARCHED**

Minimum documentation searched (classification system followed by classification symbols)
H02M5/293

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | HUBER et al. 'Space Vector Modulated Three-Phase to Three-Phase Matrix Converter with Input Power Factor Correction.', IEEE Transactions on Industry Applications, Vol.31, No.6, Pages 1234-1246, IEEE, 1995, ISSN 0093-9994 | 1-8 |
| A | KODAKA et al., "Kaso AC/DC/AC Henkan Hoshiki ni Motozuita Matrix Converter no PAM Seigyoho", National Convention Record, I.E.E. Japan, Industry Applications Society, Vol.1, pages 203 to 206, The Institute of Electrical Engineers of Japan, 2005 | 1-8 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 July, 2007 (26.07.07) | 07 August, 2007 (07.08.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005168198 A

**Non-patent literature cited in the description**

- **L. HUEVER.** Space Vector Modulated Three-phase to Three-phase Matrix Converter with Input Power Factor Correction. *IEEE trans. On Industry Applications,* 1995, vol. 31 (6